# EUROPÄISCHE PATENTSCHRIFT

(11) **EP 3 271 209 B1**
(45) Veröffentlichungstag und Bekanntmachung des Hinweises auf die Patenterteilung: **05.02.2020**
(21) Anmeldenummer: 16710181.5
(22) Anmeldetag: 16.03.2016
(51) Int. Cl.: B60N 2/07, B60N 2/06

(54) **LÄNGSEINSTELLER FÜR EINEN FAHRZEUGSITZ**
LONGITUDINAL ADJUSTER FOR A VEHICLE SEAT
DISPOSITIF DE RÉGLAGE LONGITUDINAL POUR UN SIÈGE DE VÉHICULE

(30) Priorität: 20.03.2015 DE 102015205130
(43) Veröffentlichungstag der Anmeldung: 24.01.2018
(73) Patentinhaber: Adient Luxembourg Holding S.à r.l., 1855 Luxembourg (LU)
(72) Erfinder: HOFFMANN, Andreas, 42489 Wuelfrath (DE); BALZAR, David, 42799 Leichlingen (DE)
(74) Vertreter: Liedhegener, Ralf
(86) Internationale Anmeldenummer: PCT/EP2016/055684
(87) Internationale Veröffentlichungsnummer: WO 2016/150791

(56) Entgegenhaltungen:
- DE-A1- 19 912 978
- FR-A1- 2 882 974
- US-A1- 2014 374 560

## Beschreibung

Die Erfindung betrifft einen Längseinsteller für einen Fahrzeugsitz, insbesondere für einen Kraftfahrzeugsitz, mit wenigstens einer ersten Sitzschiene, wenigstens einer relativ zu der ersten Sitzschiene verschiebbaren zweiten Sitzschiene, einer der ersten Sitzschiene zugeordneten Spindel zum Zusammenwirken mit einem der zweiten Sitzschiene zugeordneten Getriebe und wenigstens einem Spindelhalter zur Fixierung der Spindel relativ zu der ersten Sitzschiene und einer Bodenanbindung zur Anbindung der ersten Sitzschiene an einer Fahrzeugstruktur. Die Erfindung betrifft zudem einen Fahrzeugsitz.

### Stand der Technik

Aus der DE 103 18 153 A1 ist ein Längseinsteller für einen Fahrzeugsitz bekannt, mit einer ersten Sitzschiene, einer relativ zu der ersten Sitzschiene in Schienenlängsrichtung verschieblichen zweiten Sitzschiene, einer mit der ersten Sitzschiene mittels wenigstens einem Spindelhalter verbundenen Spindel und einem an der zweiten Sitzschiene gelagerten, motorisch angetriebenen, mit der Spindel zusammenwirkenden Getriebe, wobei der Spindelhalter aus einem wenigstens teilweise umgeformten Rohrprofil besteht. Der Spindelhalter weist einen gequetschten, laschenförmigen Abschnitt und einen ungequetschten, rohrförmigen Abschnitt auf. Der rohrförmige Abschnitt dient der Befestigung an einen Endabschnitt der Spindel. Der flache, laschenförmige Abschnitt weist eine Bohrung auf, welche mit einer Befestigungsöffnung der ersten Sitzschiene fluchtet, so dass mit deren Befestigung durch eine Bodenbefestigungsschraube auch der Spindelhalter fahrzeugstrukturfest angebracht und damit mit der ersten Sitzschiene verbunden wird.

Die DE 10 2004 001 593 B3 offenbart ein Verfahren zur Herstellung eines als Befestigungselement bezeichneten Spindelhalters für einen Längseinsteller für einen Fahrzeugsitz, wobei in einem ersten Schritt ein zuvor definiert abgelängter Draht zu einem Rohling gestaucht wird und in einem zweiten Schritt der Rohling zum Befestigungselement mit endgültiger Außenkontur gepresst wird. Das Befestigungselement weist eine Spindelauflage auf, mit der die Spindel verschweißt ist. Das Befestigungselement wiederum ist mittels zweier Nocken, die auf seiner eine Anlagefläche bildenden Unterseite vorgesehen sind und formschlüssig in entsprechende Aufnahmen einer Unterschiene greifen, relativ zu dieser verdrehsicher vorpositioniert. Mittels einer Schraube, die durch eine durchgängige Befestigungsöffnung in einen Befestigungsflansch des Befestigungselements greift, ist das Befestigungselement fest mit der Unterschiene und einem Fahrzeugboden verbindbar.

Aus der DE 20 2005 000 317 U1 ist ein Längseinsteller für einen Fahrzeugsitz bekannt, mit wenigstens einer ersten Sitzschiene, wenigstens einer relativ zu der ersten Sitzschiene verschiebbaren zweiten Sitzschiene, einer der ersten Sitzschiene zugeordneten Spindel zum Zusammenwirken mit einem der zweiten Sitzschiene zugeordneten Getriebe und wenigstens einem Spindelhalter zur Fixierung der Spindel relativ zu der ersten Sitzschiene und zur Beabstandung von derselben. Der Spindelhalter ist an der Spindel angeformt und weist einen Befestigungsflansch zur Befestigung an der ersten Sitzschiene und durch diese hindurch an der Fahrzeugstruktur auf.

Die DE 199 12 978 A1 offenbart einen Längseinsteller für einen Fahrzeugsitz mit einer ersten Sitzschiene, einer relativ zu der ersten Sitzschiene verschiebbaren zweiten Sitzschiene, einer der ersten Sitzschiene zugeordneten Spindel zum Zusammenwirken mit einem der zweiten Sitzschiene zugeordneten Getriebe und einem Spindelhalter zur Fixierung der Spindel relativ zu der ersten Sitzschiene, wobei der Spindelhalter nicht für eine Bodenanbindung der ersten Sitzschiene an eine Fahrzeugstruktur ausgebildet ist.

Die aus dem Stand der Technik bekannten Längseinsteller weisen allesamt Spindelhalter auf, die eine integrierte Bodenanbindung zur Befestigung einer Sitzschiene des Längseinstellers an einer Fahrzeugstruktur haben. Unterschiedliche Fahrzeugstrukturen benötigen unterschiedliche Bodenanbindungen. Dies führt zu einer hohen Variantenvielfalt von Spindelhaltern mit entsprechend hohen Werkzeugkosten und Rüstkosten.

### Aufgabe

Der Erfindung liegt die Aufgabe zu Grunde, einen Längseinsteller für einen Fahrzeugsitz der eingangs genannten Art zu verbessern, insbesondere eine Variantenvielfalt von Spindelhaltern zu reduzieren sowie einen Fahrzeugsitz mit einem entsprechenden Längseinsteller bereitzustellen.

### Lösung

Diese Aufgabe wird erfindungsgemäß gelöst durch einen Längseinsteller für einen Fahrzeugsitz, insbesondere für einen Kraftfahrzeugsitz, mit den Merkmalen des Anspruchs 1 gelöst. Dadurch, dass die Bodenanbindung und der wenigstens eine Spindelhalter separat voneinander ausgebildete Bauteile sind, kann der Spindelhalter unabhängig von der Fahrzeugstruktur ausgebildet sein. Es sind somit keine unterschiedlichen Spindelhalter für unterschiedliche Fahrzeugstrukturen notwendig. Eine Variantenvielfalt von Spindelhaltern ist somit reduziert. Zudem kann der Spindelhalter im Vergleich zu aus dem Stand der Technik bekannten Spindelhaltern in Längsrichtung kürzer sein, da dieser keine Bodenanbindung aufweist. Dadurch ist eine Verstellwegeinschränkung durch den Spindelhalter reduziert.
Die Bodenanbindung und der wenigstens eine Spindelhalter können voneinander beabstandet angeordnet sein, so dass sich die Bodenanbindung und der wenigstens eine Spindelhalter nicht berühren. Die Bodenanbindung und der wenigstens eine Spindelhalter können alternativ aneinander anliegen, ohne unmittelbar miteinander verbunden zu sein.

Vorteilhafte Ausgestaltungen, welche einzeln oder in Kombination miteinander eingesetzt werden können, sind Gegenstand der Unteransprüche.

Der Längseinsteller kann mittels unterschiedlichen Bodenanbindungen, die beispielsweise aus einem Baukasten unterschiedlicher Bodenanbindungen auswählbar sind, an einer Fahrzeugstruktur angebunden werden. Die Spindelhalter können dabei Gleichteile sein.

Die Bodenanbindung kann eine Schraube sein. Die Bodenanbindung kann eine Schraube sein, die durch ein Durchgangsloch einer ersten Schiene des Längseinstellers hindurch verläuft und den Längseinsteller mit einer Fahrzeugstruktur verschraubt. Die Bodenanbindung kann ein Adapter sein. Die Bodenanbindung kann ein Adapterfuß sein. Die Bodenanbindung kann mehrere Bauteile aufweisen. Das Schienenprofil der ersten Sitzschiene ist nicht Bestandteil der Bodenanbindung. Sämtliche Bauteile der Bodenanbindung sind separat von dem Spindelhalter ausgebildet. Vorzugsweise ist wenigstens eine erste Sitzschiene des Längseinstellers zur unmittelbaren Auflage auf einen Fahrzeugboden vorgesehen. Somit können fahrzeugspezifische Adapterteil entfallen.

Wenigstens ein Bauteil der Bodenanbindung kann mit der ersten Sitzschiene verschweißt sein. Wenigstens ein Bauteil der Bodenanbindung kann mit der ersten Sitzschiene verschraubt sein. Wenigstens ein Bauteil der Bodenanbindung kann mit der ersten Sitzschiene vernietet sein. Wenigstens ein Bauteil der Bodenanbindung kann mit der ersten Sitzschiene formschlüssig und/oder kraftschlüssig und/oder stoffschlüssig verbunden sein.

Die Spindelanbindung an die erste Sitzschiene kann in einem vorderen Endbereich der Spindel mittels eines Spindelhalters erfolgen. Die Spindelanbindung an die erste Sitzschiene kann in einem hinteren Endbereich der Spindel mittels eines Spindelhalters erfolgen. Die Spindelanbindung an die erste Sitzschiene kann in einem vorderen Endbereich der Spindel und einem hinteren Endbereich der Spindel mittels jeweils eines Spindelhalters erfolgen. Die Spindelhalter können Gleichteile sein.

Ein Spindelende kann mittels eines separat von der Bodenanbindung ausgebildeten Spindelhalters an einer Sitzschiene befestigt sein. Dabei kann ein zweites Spindelende mittels eines gemeinsam mit der Bodenanbindung ausgebildeten Spindelhalters an der Sitzschiene befestigt sein. Es können auch beide Spindelenden mittels jeweils eines separat von der Bodenanbindung ausgebildeten Spindelhalters an einer Sitzschiene befestigt sein.

Wenigstens ein Spindelhalter kann mit der ersten Sitzschiene verschweißt sein. Wenigstens ein Spindelhalter kann mit der ersten Sitzschiene verschraubt sein. Wenigstens ein Spindelhalter kann mit der ersten Sitzschiene vernietet sein. Wenigstens ein Spindelhalter kann mit der ersten Sitzschiene formschlüssig und/oder kraftschlüssig und/oder stoffschlüssig verbunden sein.

Der wenigstens eine Spindelhalter kann zwei Flansche aufweisen, die parallel in einem Abstand zueinander verlaufen und ein Ende der Spindel aufnehmen. Dadurch ist die Spindel in wenigstens einer Raumrichtung formschlüssig fixiert. Das zwischen den Flanschen angeordnete Ende der Spindel ist vorzugsweise als ein Zweikant geformt. Ein Zweikant ist geometrisch einfach und kann deshalb kostengünstig angeformt werden. Das zwischen den Flanschen angeordnete Ende der Spindel ist mit den Flanschen fest verbunden, vorzugsweise verschweißt.

Die erste Sitzschiene kann eine Unterschiene sein. Die erste Sitzschiene kann eine Oberschiene sein. Die erste Sitzschiene kann eine innere Schiene sein. Die erste Sitzschiene kann eine äußere Schiene sein.

Zur Vorpositionierung des Spindelhalters an der Sitzschiene kann der Spindelhalter ein oder mehrere Elemente, vorzugsweise Nocken, Durchstellungen, oder Beine aufweisen, die in komplementäre Öffnungen in der Sitzschiene eingesteckt werden, bevor der Spindelhalter mit der Sitzschiene verschweißt wird.

Der Spindelhalter ist ein Bracket mit einer H-Form. Der wenigstens eine Spindelhalter weist vorzugsweise ein Mittel zur Vorpositionierung des wenigstens einen Spindelhalters an der ersten Sitzschiene auf. Das Mittel zur Vorpositionierung kann in eine Öffnung, insbesondere in eine als Ausklinkung ausgebildete Öffnung der ersten Sitzschiene eingesteckt sein und insbesondere an den Kanten mittels jeweils einer I-Naht mit dieser verschweißt sein. Ein Spindelhalter kann mehrere Mittel zur Vorpositionierung aufweisen.

Der erfindungsgemäße Längseinsteller weist eine Trennung der Anbindung der Spindelhalter von der Bodenanbindung/Anbindung der Adapterfüße auf. Eine Anbindung der Spindelhalter an die Schiene kann aufgrund einer geringen Abmessung in Längsrichtung ohne oder mit einer nur geringen Verstellwegeinschränkung erfolgen.

Die Anbindung der Spindel kann vorne und hinten durch kurze, standardisierte und als Haltewinkel ausgebildete Spindelhalter erfolgen, die mit der Schiene durch Laserschweißen verbunden werden. Anbindungen an den Fahrzeugboden, bzw. an die Adapterfüße können unabhängig davon im Bereich vor/ hinter der Spindelanbindung erfolgen.

Die Sitzschienen können zum Zeitpunkt des Anschweißens der Spindelhalter bereits lackiert sein. Der Lack ist in diesem Fall partiell durch Verwendung eines Markierungslasers im Bereich der Laserschweißung zu entfernen.

Die Aufgabe wird zudem gelöst durch einen Fahrzeugsitz mit einem erfindungsgemäßen Längseinsteller. Ein erfindungsgemäßer Fahrzeugsitz weist sämtliche zuvor beschriebene Vorteile des erfindungsgemäßen Längseinstellers auf.

Figuren und Ausführungsformen der Erfindung Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Seitenansicht eines Fahrzeugsitzes,
- Fig. 2:: ausschnittsweise und in transparenter Darstellung eine perspektivische Ansicht eines Längseinstellers gemäß eines ersten, nicht erfindungsgemässen Ausführungsbeispiels,
- Fig. 3:: einen Schnitt entlang der Linie III - III in Fig. 2,
- Fig. 4:: eine Unteransicht in transparenter Darstellung auf einen Befestigungsbereich zwischen einem Spindelhalter und einer ersten Sitzschiene des Längseinstellers aus Fig. 2,
- Fig. 5:: eine Detailansicht aus Fig. 2,
- Fig. 6:: eine perspektivische Ansicht eines Spindelhalters gemäß eines zweiten, nicht erfindungsgemässen Ausführungsbeispiels,
- Fig. 7:: eine perspektivische Ansicht eines Spindelhalters und einer Spindel des zweiten Ausführungsbeispiels,
- Fig. 8:: eine perspektivische Ansicht eines Spindelhalters, einer Spindel und einer ersten Sitzschiene des zweiten Ausführungsbeispiels,
- Fig. 9:: einen Schnitt entlang der Linie IX - IX in Fig. 8,
- Fig. 10:: ausschnittsweise eine Vorderansicht auf den Längseinsteller des zweiten Ausführungsbeispiels,
- Fig. 11:: eine Seitenansicht auf den Spindelhalter und die Spindel des zweiten Ausführungsbeispiels,
- Fig. 12:: einen Schnitt entlang der Linie XII - XII in Fig. 8,
- Fig. 13:: eine perspektivische Ansicht eines Spindelhalters; einer Spindel und einer ersten Sitzschiene gemäß eines erfindungsgemässen Ausführungsbeispiels,
- Fig. 14:: einen Schnitt entlang der Linie XIV - XIV in Fig. 13,
- Fig. 15:: einen Schnitt entlang der Linie XV - XV in Fig. 13, und
- Fig. 16:: eine perspektivische Ansicht einer Spindel mit einem konventionellen Spindelhalter und einem erfindungsgemäßen Spindelhalter gemäß eines vierten Ausführungsbeispiels.

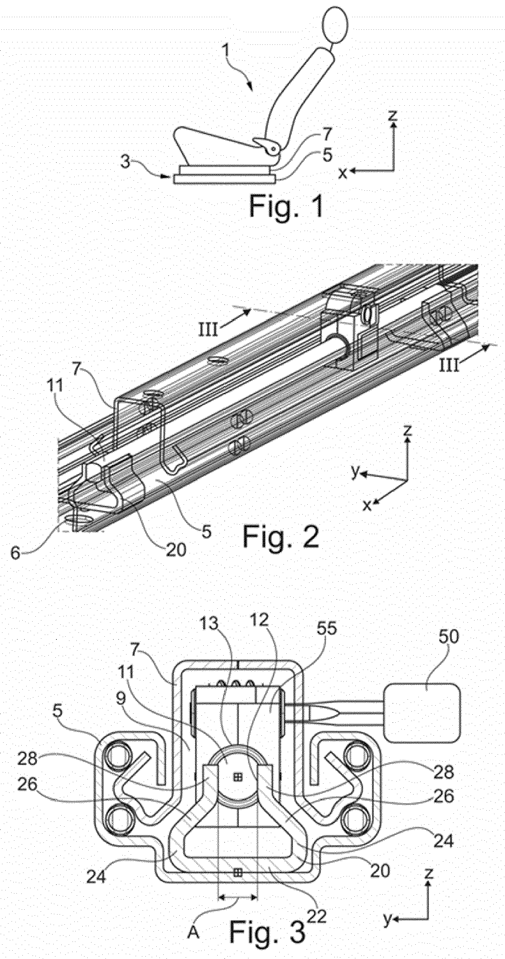

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse. Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition. Der erfindungsgemäße Fahrzeugsitz 1 kann jedoch auch in abweichender Ausrichtung, beispielsweise quer zur Fahrtrichtung verbaut werden.

Der Fahrzeugsitz 1 weist für eine Änderung der Sitzlängsposition einen motorisch angetriebenen Längseinsteller 3 mit je einem Sitzschienenpaar auf jeder Fahrzeugsitzseite auf. Das Sitzschienenpaar besteht jeweils aus einer mit der Fahrzeugstruktur verbindbaren Unterschiene als einer ersten Sitzschiene 5 und einer sitzstrukturfesten Oberschiene als einer zweiten Sitzschiene 7. Die erste Sitzschiene 5 und die zweite Sitzschiene 7 umgreifen einander wechselseitig in an sich bekannter Weise und sind in Längsrichtung x verschiebbar aneinander gelagert.

Die Figuren 2 bis 5 zeigen ein erstes, nicht erfindungsgemässes Ausführungsbeispiel eines erfindungsgemäßen Längseinstellers 3. Die beiden Sitzschienen 5, 7 bilden zwischen sich einen Bauraum 9. Innerhalb des Bauraumes 9 ist in Längsrichtung x des Sitzschienenpaares 5, 7 eine mit der ersten Sitzschiene 5 verbundene Spindel 11 angeordnet, auf deren Außenseite ein Gewinde 13 ausgebildet ist. Ein von einem Motor 50 des Längseinstellers 3 antreibbares Getriebe 55, welches in einem mit der zweiten Sitzschiene 7 fest verbundenen Gehäuse gelagert ist, weist - außer weiteren, miteinander in Getriebeverbindung stehenden Getriebeelementen - eine Spindelmutter auf, welche unter Getriebeeingriff mit dem Gewinde 13 auf der Spindel 11 angeordnet und relativ zu dieser beweglich ist. Treibt der Motor 50 das Getriebe 55 an, so verschiebt sich dieses entlang der Spindel 11 unter Mitnahme der zweiten Sitzschiene 7 und eines damit verbundenen Oberbaus des Fahrzeugsitzes 1.

An einem vorderen Ende der Spindel 11 ist ein Spindelhalter 20 befestigt. Vorzugsweise ist auch an einem hinteren Ende der Spindel 11 ein weiterer Spindelhalter 20 befestigt. Der Spindelhalter 20 dient der Befestigung der Spindel 11 an der ersten Sitzschiene 5. Die Spindel 11 ist mittels des ersten Spindelhalters 20 von der ersten Sitzschiene 5 beabstandet und relativ zu dieser fixiert.

Die erste Sitzschiene 5 ist mit einer Fahrzeugstruktur verbindbar. Dazu weist die erste Sitzschiene 5 vorliegend eine als Schraubendurchgangsloch dienende Öffnung 6 auf, durch die hindurch eine Schraube geführt sein kann, die in ein mit der Fahrzeugstruktur verbundenes Innengewinde, insbesondere in eine Schweißmutter, einschraubbar ist. Die Schraube dient einer Bodenanbindung der ersten Sitzschiene 5 an die Fahrzeugstruktur. In Abwandlungen des Ausführungsbeispiels ist die erste Sitzschiene 5 nicht mittels einer Schraube mit der Fahrzeugstruktur verbunden, sondern mittels einer anderen Bodenanbindung, beispielsweise mittels eines Nietes oder eines mit der ersten Sitzschiene 5 verbundenen Adapters.

Der Spindelhalter 20 weist einen Steg 22, zwei erste Schenkel 24, zwei zweite Schenkel 26 und zwei Flansche 28 auf. Der Steg 22 hat eine ebene, viereckige, insbesondere rechteckige, Grundform und ist im Fahrzeugsitz 1 parallel zur Längsrichtung x und parallel zur Querrichtung y ausgerichtet. An zwei gegenüberliegenden Seiten des Stegs 22 schließt sich jeweils einer der beiden ersten Schenkel 24 an. Die beiden ersten Schenkel 24 haben jeweils eine ebene, rechteckige Grundform und sind im Fahrzeugsitz 1 parallel zur Längsrichtung x und parallel zur Vertikalrichtung z ausgerichtet. Jeder der beiden ersten Schenkel 24 ist mittels jeweils eines gebogenen Übergangsbereiches mit dem Steg 22 verbunden.

An einer dem Steg 22 abgewandten Seite eines jeden ersten Schenkels 24 schließt sich jeweils einer der beiden zweiten Schenkel 26 an. Die beiden zweiten Schenkel 26 haben jeweils eine ebene, rechteckige Grundform und verlaufen ausgehend von den ersten Schenkeln 24 schräg aufeinander zu. Die beiden zweiten Schenkel 26 sind jeweils mittels eines gebogenen Übergangsbereiches mit jeweils einem der beiden ersten Schenkel 24 verbunden.

An einer von den ersten Schenkeln 24 abgewandten Seite eines jeden zweiten Schenkels 26 schließt sich jeweils einer der beiden Flansche 28 an. Die beiden Flansche 28 haben jeweils eine ebene, rechteckige Grundform und sind im Fahrzeugsitz 1 parallel zur Längsrichtung x und parallel zur Vertikalrichtung z ausgerichtet. Die beiden Flansche 28 sind jeweils mittels eines gebogenen Übergangsbereiches mit jeweils einem der beiden zweiten Schenkel 26 verbunden. Die beiden Flansche 28 des Spindelhalters 20 verlaufen parallel zueinander mit einem Abstand A.

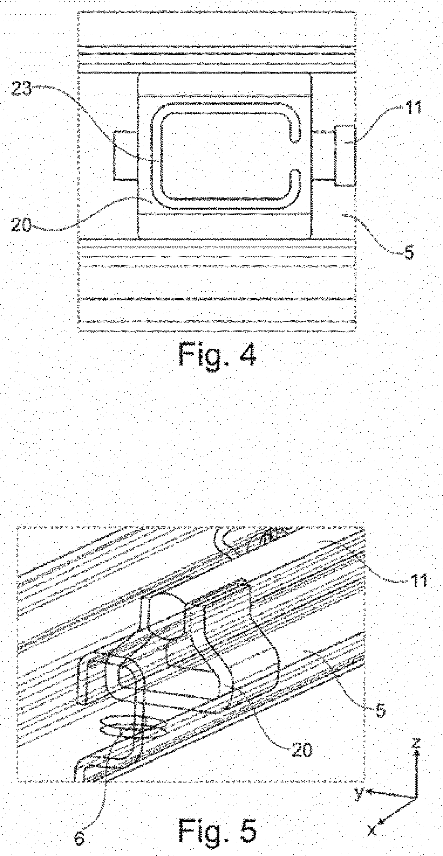

Der Steg 22 des Spindelhalters 20 liegt auf einer Bodenfläche der ersten Sitzschiene 5 auf und ist mit dieser mittels einer Schweißnaht 23 verschweißt. Wie in Figur 4 erkennbar, ist die Schweißnaht 23 C-förmig ausgebildet. Die Schweißnaht 23 ist vorliegend durch Laserschweißen erzeugt, könnte jedoch auch mittels eines anderen Schweißverfahrens erzeugt sein. Der im vorderen Bereich der ersten Sitzschiene 5 befestigte Spindelhalter 20 ist - in Längsrichtung x und in Fahrtrichtung betrachtet - hinter der als Schraubendurchgangsloch dienenden Öffnung 6 angeordnet. In Abwandlungen des Ausführungsbeispiels ist der Spindelhalter 20 mit der ersten Sitzschiene 5 verschraubt oder vernietet.

Wenigstens einer von zwei Endbereichen der Spindel 11 hat eine kreisrunde Grundform, die mit einem Zweikant 12 versehen ist. Der Zweikant 12 ist durch zwei parallele Flächen gebildet, die zueinander den gleichen Abstand A haben wie die beiden Flansche 28, jedoch ebenfalls hinter der Öffnung 6.

Der Zweikant 12 eines Endbereichs der Spindel 11 ist zwischen den beiden Flanschen 28 angeordnet und mit diesen verschweißt, vorzugsweise mittels Laserschweißens. Die Spindel 11 ist somit über den Spindelhalter 20 fest mit der ersten Schiene 5 verbunden. Vorzugsweise ist die Spindel 11 in jedem ihrer beiden Endbereiche mittels eines Spindelhalters 20 entsprechend mit der ersten Schiene 5 verbunden. Dabei ist vor dem vorderen Spindelhalter 20 eine Öffnung 6 angeordnet und hinter einem hinteren Spindelhalter eine weitere Öffnung angeordnet.

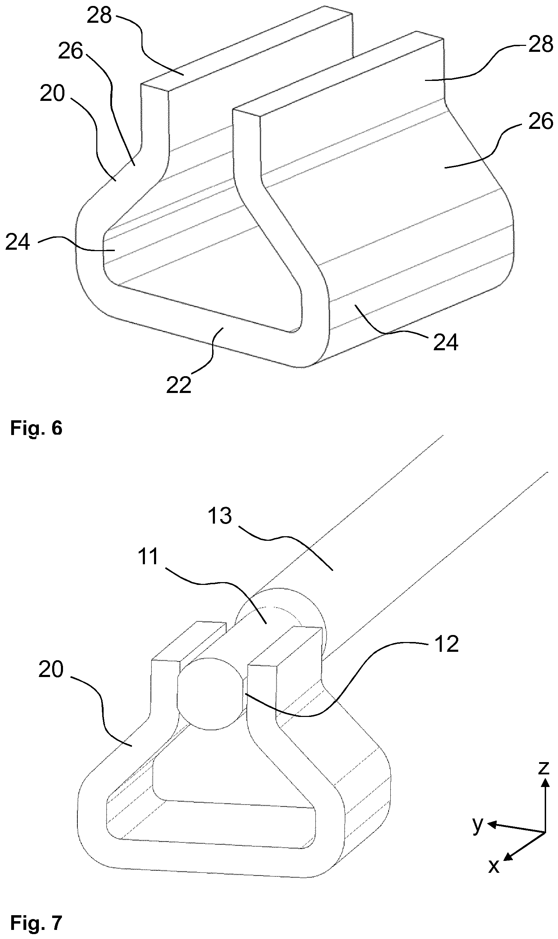

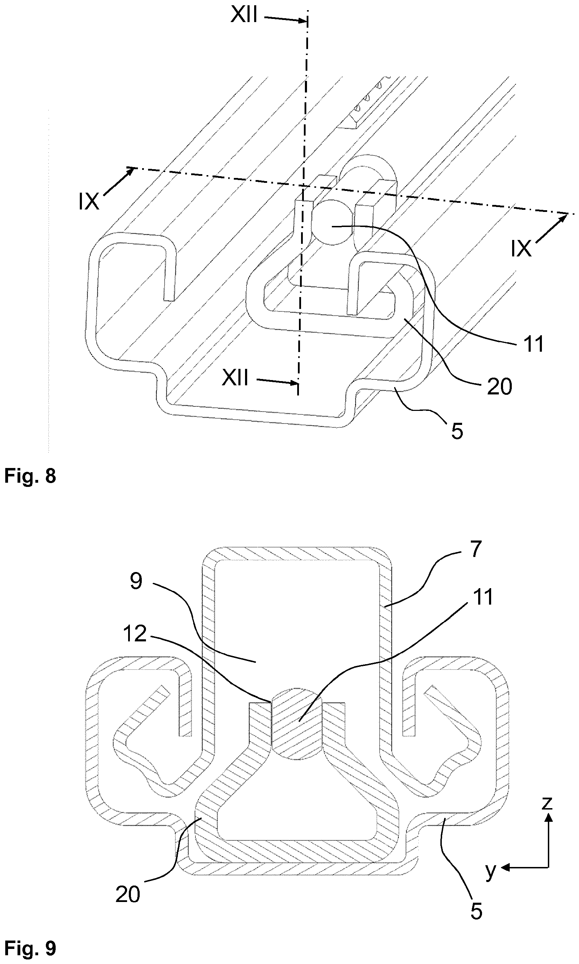

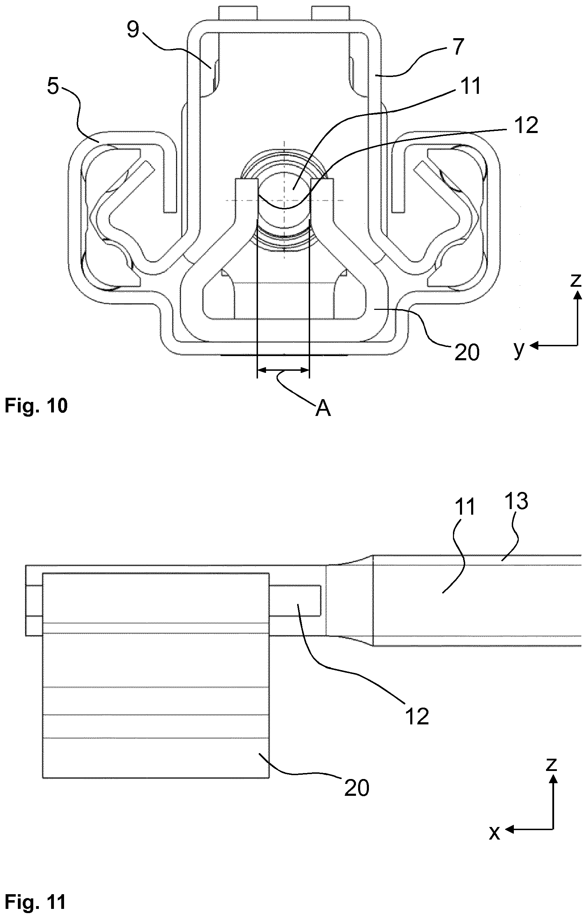

In den Figuren 6 bis 12 ist ein zweites, nicht erfindungsgemässes Ausführungsbeispiel eines erfindungsgemäßen Längseinstellers 3 dargestellt. Das zweite Ausführungsbeispiel entspricht dem ersten Ausführungsbeispiel, soweit nachfolgend nicht abweichend beschrieben. Gleiche oder gleichwirkende Bauteile des ersten und des zweiten Ausführungsbeispiels tragen daher die gleichen Bezugszeichen. Im Gegensatz zum ersten Ausführungsbeispiel weist eine erste Sitzschiene 5 keine Öffnung als Durchgangsloch für eine Bodenanbindung mittels einer Schraube auf. Die Bodenanbindung kann beispielsweise ein in den Figuren nicht dargestellter Adapter sein, der an der ersten Sitzschiene 5 befestigt, insbesondere angeschweißt, ist.

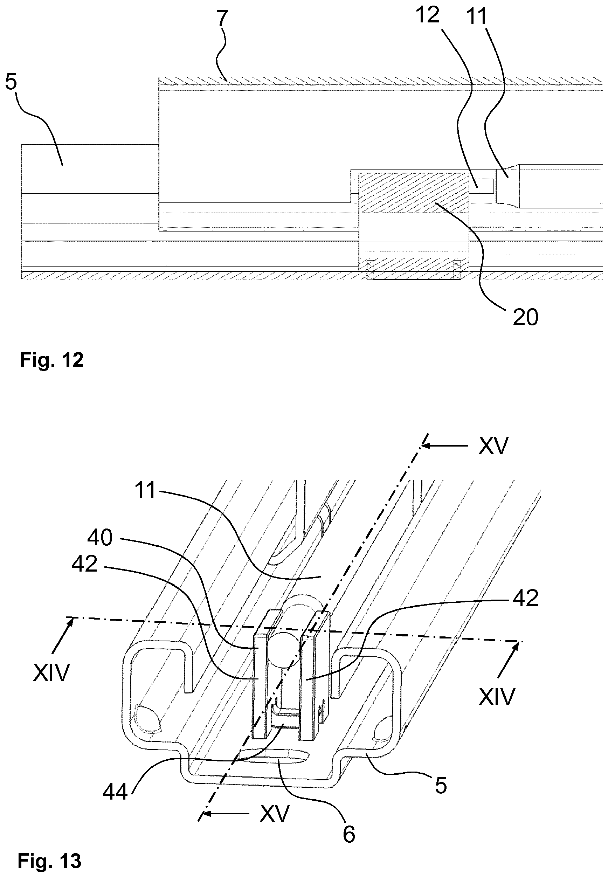

In den Figuren 13 bis 15 ist ein erfindungsgemässes Ausführungsbeispiel eines erfindungsgemäßen Längseinstellers 3 dargestellt. Das dritte Ausführungsbeispiel entspricht dem ersten Ausführungsbeispiel, soweit nachfolgend nicht abweichend beschrieben. Gleiche oder gleichwirkende Bauteile des ersten und des dritten Ausführungsbeispiels tragen daher die gleichen Bezugszeichen.

An einem vorderen Ende einer Spindel 11 ist ein Spindelhalter 40 befestigt, dessen Funktion und Anordnung bis auf die nachfolgend genannten Unterschiede denen des Spindelhalters 20 des ersten Ausführungsbeispiels entsprechen. Der Spindelhalter 40 ist H-förmig ausgebildet. Der Spindelhalter 40 weist zwei Flansche 42 auf, die mittels eines Stegs 44 miteinander verbunden sind. Die beiden Flansche 42 haben jeweils eine ebene, rechteckige Grundform und sind parallel zur Längsrichtung x und parallel zur Vertikalrichtung z ausgerichtet. Die beiden Flansche 42 des Spindelhalters 40 verlaufen parallel zueinander mit einem Abstand A.

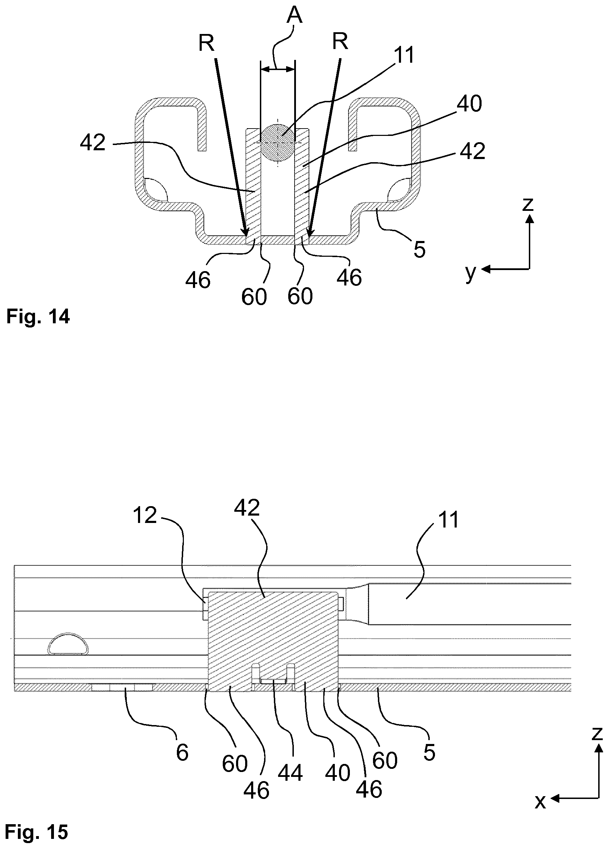

Jeder der beiden Flansche 42 des Spindelhalters 40 weist zwei Zapfen 46 auf, die in Richtung einer Bodenfläche der ersten Sitzschiene 5 orientiert sind. Die Zapfen 46 haben einen rechteckigen Querschnitt und greifen in komplementär geformte Ausklinkungen 60 in der Bodenfläche der ersten Sitzschiene 5 ein. Die Zapfen 46 sind mit der ersten Sitzschiene 5 verschweißt, vorzugsweise mittels Laserschweißens. Figur 14 zeigt die Schweißrichtung R, aus der während des Schweißprozesses ein Laserstrahl auf die Fügestelle zwischen den Zapfen 46 und der ersten Sitzschiene 5 auftrifft und eine I-Naht erzeugt.

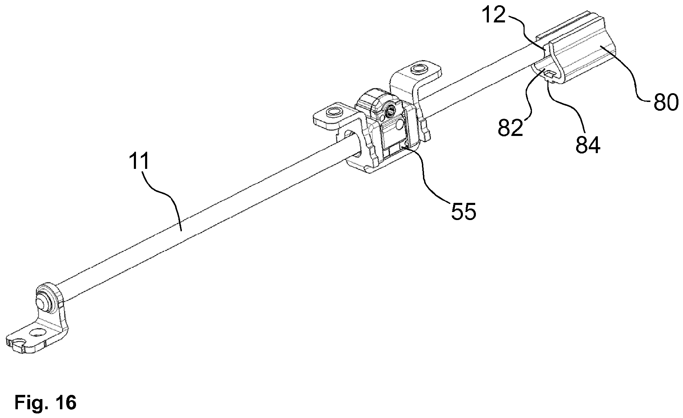

Figur 16 zeigt eine perspektivische Ansicht einer Spindel 11 mit einem konventionellen Spindelhalter mit einer integrierten Bodenanbindung an einem ersten Spindelende, und einem separat von einer Bodenanbindung ausgebildeten Spindelhalter 80 gemäß eines vierten Ausführungsbeispiels an einem zweiten Spindelende. Figur 16 zeigt zudem ein Getriebe 55, das auf der Spindel 11 aufgeschraubt ist. In einer Abwandlung des vierten Ausführungsbeispiels weist die Spindel 11 statt des konventionellen Spindelhalters an dem ersten Spindelende ebenfalls einen, separat von einer Bodenanbindung ausgebildeten Spindelhalter 80 auf.

Der Spindelhalter 80 entspricht von seiner Form bis auf die nachfolgend beschriebenen Unterschiede dem Spindelhalter 20 des ersten und zweiten Ausführungsbeispiels. Die Länge des Spindelhalters 80 in Längsrichtung x kann von der Länge des Spindelhalters 20 des ersten und zweiten Ausführungsbeispiels abweichen. Zudem weist der Spindelhalter 80 einen, insbesondere entgegen der Vertikalrichtung z, aus einem Steg 82 durchgestellten Nocken 84 zum Einfügen in eine entsprechende Ausklinkung der ersten Sitzschiene 5 auf. Der Nocken 84 dient einer Vorpositionierung des Spindelhalters 80 an der ersten Sitzschiene 5, bevor der Spindelhalter 80 mit der ersten Sitzschiene 5 verschweißt wird. In einer weiteren Abwandlung des Ausführungsbeispiels weist der Steg 82 mehrere solche Nocken 84 auf. Auch die Spindelhalter 20 des ersten und des zweiten Ausführungsbeispiels können in vorteilhafter Weise durch einen solchen Nocken ergänzt sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus den Patentansprüchen.

In den Patentansprüchen verwendete Begriffe wie "umfassen", "aufweisen", "beinhalten", "enthalten" und dergleichen schließen weitere Elemente oder Schritte nicht aus.

### Bezugszeichenliste

- 1: Fahrzeugsitz
- 3: Längseinsteller
- 5: erste Sitzschiene
- 6: Öffnung
- 7: zweite Sitzschiene
- 9: Bauraum
- 11: Spindel
- 12: Zweikant
- 13: Gewinde
- 20: Spindelhalter
- 22: Steg
- 23: Schweißnaht
- 24: erster Schenkel
- 26: zweiter Schenkel
- 28: Flansch
- 40: Spindelhalter
- 42: Flansch
- 44: Steg
- 46: Zapfen
- 50: Motor
- 55: Getriebe
- 60: Ausklinkung
- 80: Spindelhalter
- 82: Steg
- 84: Nocken
- A: Abstand
- R: Schweißrichtung
- x: Längsrichtung
- y: Querrichtung
- z: Vertikalrichtung

## Patentansprüche

1. Längseinsteller (3) für einen Fahrzeugsitz, insbesondere für einen Kraftfahrzeugsitz, mit wenigstens einer ersten Sitzschiene (5), wenigstens einer relativ zu der ersten Sitzschiene (5) verschiebbaren zweiten Sitzschiene (7), einer der ersten Sitzschiene (5) zugeordneten Spindel (11) zum Zusammenwirken mit einem der zweiten Sitzschiene (7) zugeordneten Getriebe (55) und wenigstens einem Spindelhalter (20, 40, 80) zur Fixierung der Spindel (11) relativ zu der ersten Sitzschiene (5) und einer Bodenanbindung zur Anbindung der ersten Sitzschiene (5) an einer Fahrzeugstruktur, wobei die Bodenanbindung und der wenigstens eine Spindelhalter (20, 40, 80) separat voneinander ausgebildete Bauteile sind, **dadurch gekennzeichnet, dass** der wenigstens eine Spindelhalter (40) eine H-Form aufweist, wobei der wenigstens eine Spindelhalter (40) zwei Flansche (42) aufweist, die mittels eines Stegs (44) miteinander verbunden sind.

2. Längseinsteller (3) nach Anspruch 1, **dadurch gekennzeichnet, dass** die Spindel (11) mittels zweier Spindelhalter an der ersten Sitzschiene (5) fixiert ist, wovon genau ein Spindelhalter (40) separat von der Bodenanbindung ausgebildet ist.

3. Längseinsteller (3) nach Anspruch 1, **dadurch gekennzeichnet, dass** die Spindel (11) mittels zweier Spindelhalter (40) an der ersten Sitzschiene (5) fixiert ist, und beide Spindelhalter (40) separat von der Bodenanbindung ausgebildet sind.

4. Längseinsteller (3) nach einem der Ansprüche 1 bis 3, **dadurch gekennzeichnet, dass** der wenigstens eine Spindelhalter (40) mittels wenigstens einer Schweißnaht (23) mit der ersten Sitzschiene (5) verschweißt ist.

5. Längseinsteller (3) nach Anspruch 1, **dadurch gekennzeichnet, dass** der wenigstens eine Spindelhalter (40) mit einer Überlappnaht und/oder einer Kehlnaht mit der ersten Sitzschiene (5) verschweißt ist

6. Längseinsteller (3) nach einem der Ansprüche 1 bis 5, **dadurch gekennzeichnet, dass** der wenigstens eine Spindelhalter (40) zwei Flansche (28, 42) aufweist, die parallel in einem Abstand (A) zueinander verlaufen und ein Ende der Spindel (11) aufnehmen.

7. Längseinsteller (3) nach Anspruch 6, **dadurch gekennzeichnet, dass** das zwischen den Flanschen (28, 42) angeordnete Ende der Spindel (11) als ein Zweikant (12) geformt ist.

8. Längseinsteller (3) nach Anspruch 7, **dadurch gekennzeichnet, dass** das zwischen den Flanschen (28, 42) angeordnete Ende der Spindel (11) mit den Flanschen (28, 42) verschweißt ist.

9. Längseinsteller (3) nach einem der Ansprüche 1 bis 8, **dadurch gekennzeichnet, dass** der wenigstens eine Spindelhalter (40) Mittel (46, 84) zur Vorpositionierung des wenigstens einen Spindelhalters (40) an der ersten Sitzschiene (5) aufweist.

10. Längseinsteller (3) nach einem der Ansprüche 1 bis 9, **dadurch gekennzeichnet, dass** die Bodenanbindung und der wenigstens eine Spindelhalter (40) voneinander beabstandet angeordnet sind.

11. Fahrzeugsitz (1) mit einem Längseinsteller (3) nach einem der Ansprüche 1 bis 10.

12. Fahrzeugsitz (1) nach Anspruch 11, **dadurch gekennzeichnet, dass** wenigstens eine erste Sitzschiene (5) zur unmittelbaren Auflage auf einen Fahrzeugboden vorgesehen ist.

## Claims

1. Longitudinal adjustment mechanism (3) for a vehicle seat, in particular for a motor vehicle seat, having at least one first seat rail (5), at least one second seat rail (7) that is displaceable relative to the first seat rail (5), a spindle (11), assigned to the first seat rail (5), for interacting with a gearbox (55) that is assigned to the second seat rail (7), and at least one spindle holder (20, 40, 80) for fixing the spindle (11) relative to the first seat rail (5), and a floor connection for connecting the first seat rail (5) to a vehicle structure, wherein the floor connection and the at least one spindle holder (20, 40, 80) are components that are configured so as to be mutually separate, **characterized**
**in that** the at least one spindle holder (40) is H-shaped, wherein the at least one spindle holder (40) has two flanges (42) which are interconnected by means of a web (44).

2. Longitudinal adjustment mechanism (3) according to Claim 1, **characterized in that** the spindle (11) is fixed to the first seat rail (5) by means of two spindle holders, of which exactly one spindle holder (40) is configured so as to be separate from the floor connection.

3. Longitudinal adjustment mechanism (3) according to Claim 1, **characterized in that** the spindle (11) is fixed to the first seat rail (5) by means of two spindle holders (40), both spindle holders (40) being configured so as to be separate from the floor connection.

4. Longitudinal adjustment mechanism (3) according to one of Claims 1 to 3, **characterized in that** the at least one spindle holder (40) is welded to the first seat rail (5) by means of at least one weld seam (23).

5. Longitudinal adjustment mechanism (3) according to Claim 1, **characterized in that** the at least one spindle holder (40) is welded to the first seat rail (5) by way of a lap weld and/or a hollow weld.

6. Longitudinal adjustment mechanism (3) according to one of Claims 1 to 5, **characterized in that** the at least one spindle holder (40) has two flanges (28, 42) which run so as to be mutually parallel at a spacing (A) and receive one end of the spindle (11).

7. Longitudinal adjustment mechanism (3) according to Claim 6, **characterized in that** the end of the spindle (11) that is disposed between the flanges (28, 42) is shaped as a double flat (12).

8. Longitudinal adjustment mechanism (3) according to Claim 7, **characterized in that** the end of the spindle (11) that is disposed between the flanges (28, 42) is welded to the flanges (28, 42).

9. Longitudinal adjustment mechanism (3) according to one of Claims 1 to 8, **characterized in that** the at least one spindle holder (40) has means (46, 84) for pre-positioning the at least one spindle holder (40) on the first seat rail (5).

10. Longitudinal adjustment mechanism (3) according to one of Claims 1 to 9, **characterized in that** the floor connection and the at least one spindle holder (40) are disposed so as to be mutually spaced apart.

11. Vehicle seat (1) having a longitudinal adjustment mechanism (3) according to one of Claims 1 to 10.

12. Vehicle seat (1) according to Claim 11, **characterized in that** at least one first seat rail (5) is provided for bearing directly on a vehicle floor.

## Revendications

1. Dispositif de réglage longitudinal (3) pour un siège de véhicule, en particulier pour un siège de véhicule automobile, comprenant au moins un premier rail de siège (5), au moins un deuxième rail de siège (7) pouvant coulisser par rapport au premier rail de siège (5), une broche (11) associée au premier rail de siège (5), destinée à coopérer avec une transmission (55) associée au deuxième rail de siège (7) et au moins un dispositif de retenue de broche (20, 40, 80) pour fixer la broche (11) par rapport au premier rail de siège (5) et une liaison au sol pour la liaison du premier rail de siège (5) à une structure du véhicule, la liaison au sol et l'au moins un dispositif de retenue de broche (20, 40, 80) étant des composants réalisés séparément l'un de l'autre,
**caractérisé en ce que**
l'au moins un dispositif de retenue de broche (40) présente une forme en H, l'au moins un dispositif de retenue de broche (40) présentant deux brides (42) qui sont reliées l'une à l'autre au moyen d'une nervure (44).

2. Dispositif de réglage longitudinal (3) selon la revendication 1, **caractérisé en ce que** la broche (11) est fixée au premier rail de siège (5) au moyen de deux dispositifs de retenue de broche, dont l'un dispositif de retenue de broche (40) exactement est réalisé de manière séparée de la liaison au sol.

3. Dispositif de réglage longitudinal (3) selon la revendication 1, **caractérisé en ce que** la broche (11) est fixée au premier rail de siège (5) au moyen de deux dispositifs de retenue de broche (40), et les deux dispositifs de retenue de broche (40) sont réalisés de manière séparée de la liaison au sol.

4. Dispositif de réglage longitudinal (3) selon l'une quelconque des revendications 1 à 3, **caractérisé en ce que** l'au moins un dispositif de retenue de broche (40) est soudé au premier rail de siège (5) au moyen d'au moins un cordon de soudure (23).

5. Dispositif de réglage longitudinal (3) selon la revendication 1, **caractérisé en ce que** l'au moins un dispositif de retenue de broche (40) est soudé au premier rail de siège (5) avec une soudure à recouvrement et/ou une soudure d'angle.

6. Dispositif de réglage longitudinal (3) selon l'une quelconque des revendications 1 à 5, **caractérisé en ce que** l'au moins un dispositif de retenue de broche (40) présente deux brides (28, 42) qui s'étendent parallèlement l'une à l'autre à une distance (A) et qui reçoivent une extrémité de la broche (11).

7. Dispositif de réglage longitudinal (3) selon la revendication 6, **caractérisé en ce que** l'extrémité de la broche (11) disposée entre les brides (28, 42) est réalisée sous forme d'extrémité à deux pans (12).

8. Dispositif de réglage longitudinal (3) selon la revendication 7, **caractérisé en ce que** l'extrémité de la broche (11) disposée entre les brides (28, 42) est soudée aux brides (28, 42).

9. Dispositif de réglage longitudinal (3) selon l'une quelconque des revendications 1 à 8, **caractérisé en ce que** l'au moins un dispositif de retenue de broche (40) présente des moyens (46, 84) pour le pré-positionnement de l'au moins un dispositif de retenue de broche (40) sur le premier rail de siège (5).

10. Dispositif de réglage longitudinal (3) selon l'une quelconque des revendications 1 à 9, **caractérisé en ce que** la liaison au sol et l'au moins un dispositif de retenue de broche (40) sont disposés à distance l'un de l'autre.

11. Siège de véhicule (1) comprenant un dispositif de réglage longitudinal (3) selon l'une quelconque des revendications 1 à 10.

12. Siège de véhicule (1) selon la revendication 11, **caractérisé en ce qu'**au moins un premier rail de siège (5) est prévu pour reposer directement sur un sol du véhicule.
